# EUROPEAN PATENT APPLICATION

(11) **EP 1 659 539 A1**
(43) Date of publication of application: **24.05.2006**
(21) Application number: 05020796.8
(22) Date of filing: 23.09.2005
(51) Int. Cl.: G06T 15/50

(54) **Method for efficient anti-aliasing of 3D graphics**

(30) Priority: 19.10.2004 US 969517
(71) Applicant: Microsoft Corporation, Redmond WA 98052 (US)
(72) Inventor: Stevenson, Alexander, Redmond, WA 98052 (US); Michail, Ashraf A., Redmond, WA 98052 (US)
(74) Representative: Goddar, Heinz J.

(57) **Abstract**

A method and system for antl-aliased rasterization of objects From a particular viewpoint of an object represented by shapes, a shape is selected having an edge on a silhouette of the object An edge geometry is created at the edge of the shape that is on the silhouette of the object The edge geometry is rendered Either the shape is rendered after the edge geometry is rendered with the depth test set so as to not allow portions of the shape to overlap the edge geometry, or the shape itself is modified to remove any portion that overlaps the edge geometry This may be repeated for each edge of each shape that lies on the silhouette of the object

## Description

### FIELD OF THE INVENTION

The invention relates generally to computers, and more particularly to images

### BACKGROUND

Anti-aliasing is used to reduce aliasing artifacts common with diagonal or curved edges in computer images Current techniques for anti-aliased rasterization of 3D models either require an excessive amount of time, special hardware support, or result in unacceptable artifacts, such as object bloating Furthermore, anti-aliasing for 3D models varies in quality and performance from one graphics card to another What is needed is a method for accelerating anti-aliasing for 3D models Ideally, such a method would provide consistent results across graphics cards

### SUMMARY

Briefly, the present invention provides a method and system for anti-aliased rasterization of objects From a particular viewpoint of an object represented by shapes, a shape is selected having an edge on a silhouette of the object An edge geometry is created at the edge of the shape that is on the silhouette of the object The edge geometry is rendered Either the shape is rendered after the edge geometry is rendered with the depth test set so as to not allow portions of the shape to overlap the edge geometry, or the shape itself is modified to remove any portion that overlaps the edge geometry This may be repeated for each edge of each shape that lies on the silhouette of the object

In one aspect of the invention, the edge geometry is textured with the texture that matches the texture at the edge of the shape The edge geometry also has a texture placed thereon that has a varying transparency from opaque to completely transparent This causes colors from pixels underneath the edge geometry to be mixed with colors from pixels of the edge geometry This has the effect of anti-aliasing the silhouette of the object

Other aspects will become apparent from the following detailed description when taken in conjunction with the drawings, in which

### BRIEF DESCRIPTION OF THE DRAWINGS

FIGURE 1 is a block diagram representing a computer system into which the present invention may be incorporated,
FIG 2 is a diagram that illustrates a triangle on a grid in accordance with various aspects of the invention,
FIG 3 is a diagram that shows a triangle and pixels in accordance with various aspects of the invention,
FIG 4 is a flow diagram that represents actions that may be performed in anti-aliasing in accordance with various aspects of the invention,
FIG 5 is a flow diagram corresponding to the block 425 of FIG 4 in accordance with various aspects of the invention,
FIG 6 is a diagram that shows the triangle of FIG 3 together with an example of new edge geometry in accordance with various aspects of the invention, and
FIG 7 is a diagram that shows the triangle of FIG 3 together with another example of edge geometry in accordance with various aspects of the invention

### DETAILED DESCRIPTION

### EXEMPLARY OPERATING ENVIRONMENT

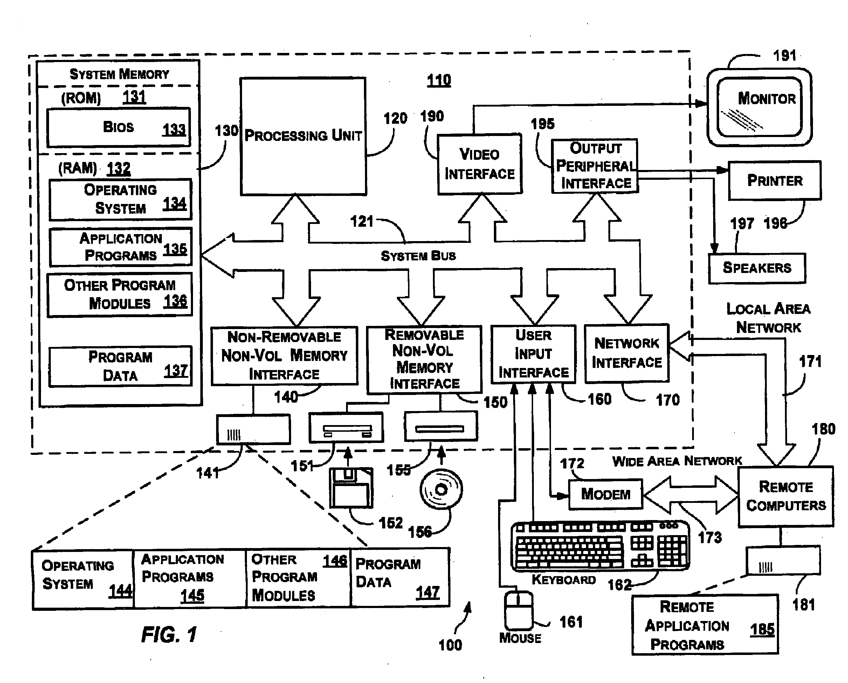

Figure 1 illustrates an example of a suitable computing system environment 100 on which the invention may be implemented The computing system environment 100 is only one example of a suitable computing environment and is not intended to suggest any limitation as to the scope of use or functionality of the invention Neither should the computing environment 100 be interpreted as having any dependency or requirement relating to any one or combination of components illustrated in the exemplary operating environment 100

The invention is operational with numerous other general purpose or special purpose computing system environments or configurations Examples of well known computing systems, environments, and/or configurations that may be suitable for use with the invention include, but are not limited to, personal computers, server computers, hand-held or laptop devices, multiprocessor systems, microcontroller-based systems, set top boxes, programmable consumer electronics, network PCs, minicomputers, mainframe computers, distributed computing environments that include any of the above systems or devices, and the like

The invention may be described in the general context of computer-executable instructions, such as program modules, being executed by a computer Generally, program modules include routines, programs, objects, components, data structures, and so forth, which perform particular tasks or implement particular abstract data types The invention may also be practiced in distributed computing environments where tasks are performed by remote processing devices that are linked through a communications network In a distributed computing environment, program modules may be located in both local and remote computer storage media including memory storage devices

With reference to Figure 1, an exemplary system for implementing the invention includes a general-purpose computing device in the form of a computer 110 Components of the computer 110 may include, but are not limited to, a processing unit 120, a system memory 130, and a system bus 121 that couples various system components including the system memory to the processing unit 120 The system bus 121 may be any of several types of bus structures including a memory bus or memory controller, a peripheral bus, and a local bus using any of a variety of bus architectures By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus

Computer 110 typically includes a variety of computer-readable media Computer-readable media can be any available media that can be accessed by the computer 110 and includes both volatile and nonvolatile media, and removable and non-removable media By way of example, and not limitation, computer-readable media may comprise computer storage media and communication media Computer storage media includes both volatile and nonvolatile, removable and non-removable media implemented in any method or technology for storage of information such as computer-readable instructions, data structures, program modules, or other data Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by the computer 110 Communication media typically embodies computer-readable instructions, data structures, program modules, or other data in a modulated data signal such as a carrier wave or other transport mechanism and includes any information delivery media The term "modulated data signal" means a signal that has one or more of its characteristics set or changed in such a manner as to encode information in the signal By way of example, and not limitation, communication media includes wired media such as a wired network or direct-wired connection, and wireless media such as acoustic, RF, infrared and other wireless media Combinations of the any of the above should also be included within the scope of computer-readable media

The system memory 130 includes computer storage media in the form of volatile and/or nonvolatile memory such as read only memory (ROM) 131 and random access memory (RAM) 132 A basic input/output system 133 (BIOS), containing the basic routines that help to transfer information between elements within computer 110, such as during start-up, is typically stored in ROM 131 RAM 132 typically contains data and/or program modules that are immediately accessible to and/or presently being operated on by processing unit 120 By way of example, and not limitation, Figure 1 illustrates operating system 134, application programs 135, other program modules 136, and program data 137

The computer 110 may also include other removable/non-removable, volatile/nonvolatile computer storage media By way of example only, Figure 1 illustrates a hard disk drive 140 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150

The drives and their associated computer storage media, discussed above and illustrated in Figure 1, provide storage of computer-readable instructions, data structures, program modules, and other data for the computer 110 In Figure 1, for example, hard disk drive 141 is illustrated as storing operating system 144, application programs 145, other program modules 146, and program data 147 Note that these components can either be the same as or different from operating system 134, application programs 135, other program modules 136, and program data 137 Operating system 144, application programs 145, other program modules 146, and program data 147 are given different numbers herein to illustrate that, at a minimum, they are different copies A user may enter commands and information into the computer 20 through input devices such as a keyboard 162 and pointing device 161, commonly referred to as a mouse, trackball or touch pad Other input devices (not shown) may include a microphone, joystick, game pad, satellite dish, scanner, a touch-sensitive screen of a handheld PC or other writing tablet, or the like These and other input devices are often connected to the processing unit 120 through a user input interface 160 that is coupled to the system bus, but may be connected by other interface and bus structures, such as a parallel port, game port or a universal serial bus (USB) A monitor 191 or other type of display device is also connected to the system bus 121 via an interface, such as a video interface 190 In addition to the monitor, computers may also include other peripheral output devices such as speakers 197 and printer 196, which may be connected through an output peripheral interface 195

The computer 110 may operate in a networked environment using logical connections to one or more remote computers, such as a remote computer 180 The remote computer 180 may be a personal computer, a server, a router, a network PC, a peer device or other common network node, and typically includes many or all of the elements described above relative to the computer 110, although only a memory storage device 181 has been illustrated in Figure 1 The logical connections depicted in Figure 1 include a local area network (LAN) 171 and a wide area network (WAN) 173, but may also include other networks Such networking environments are commonplace in offices, enterprise-wide computer networks, intranets and the Internet

When used in a LAN networking environment, the computer 110 is connected to the LAN 171 through a network interface or adapter 170 When used in a WAN networking environment, the computer 110 typically includes a modem 172 or other means for establishing communications over the WAN 173, such as the Internet The modem 172, which may be internal or external, may be connected to the system bus 121 via the user input interface 160 or other appropriate mechanism In a networked environment, program modules depicted relative to the computer 110, or portions thereof, may be stored in the remote memory storage device By way of example, and not limitation, Figure 1 illustrates remote application programs 185 as residing on memory device 181 It will be appreciated that the network connections shown are exemplary and other means of establishing a communications link between the computers may be used

### Accelerated Anti-Aliasing in 3D

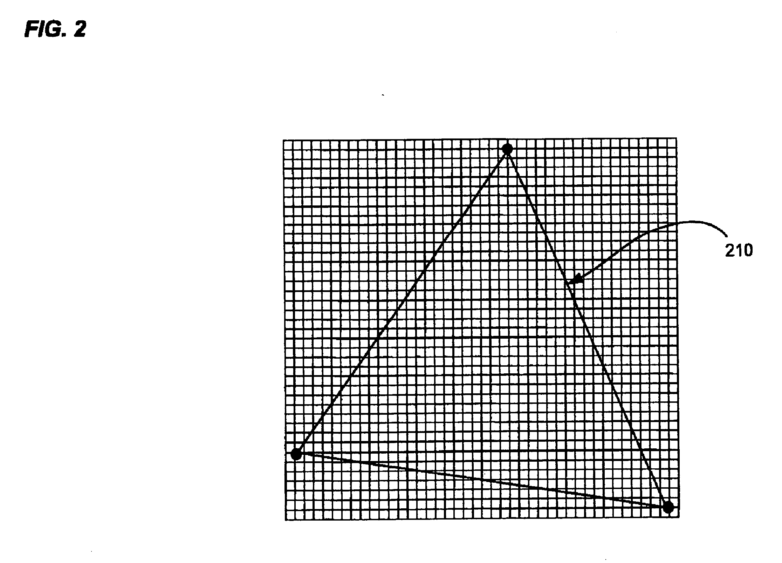

FIG 2 is a diagram that illustrates a triangle on a grid in accordance with various aspects of the invention A display may be divided into pixels arranged in a grid such as the one shown surrounding the triangle 210 and may include other pixels to the edges of the display Typically, a computer may cause each pixel on the display to display a color independently of the colors displayed in other pixels displayed on the display

Pixels with pixel centers located within the triangle 210 may be caused to display colors associated with the triangle 210 while pixels with pixel centers outside of the triangle may be caused to display a background color such as black Without anti-aliasing, this may result in a stair-stepping pattern of pixels at the borders of the triangle 210

Objects, including three-dimensional (3D) objects, may be represented by a collection of shapes In practice, each shape may be a triangle or be divided into triangles Some of these triangles may lie totally within the boundaries of an object, while other triangles may lie at the edge of the object when the object is viewed from a particular viewpoint Triangles that lie at the edge of an object (from a particular viewpoint) may have one or more edges that form a portion of a silhouette edge of the object For 3D objects comprised of triangles, a silhouette edge is an edge that touches both a triangle that faces a viewpoint and a triangle that faces away from the viewpoint A triangle faces a viewpoint if the normal of the plane in which the triangle resides points towards the viewpoint

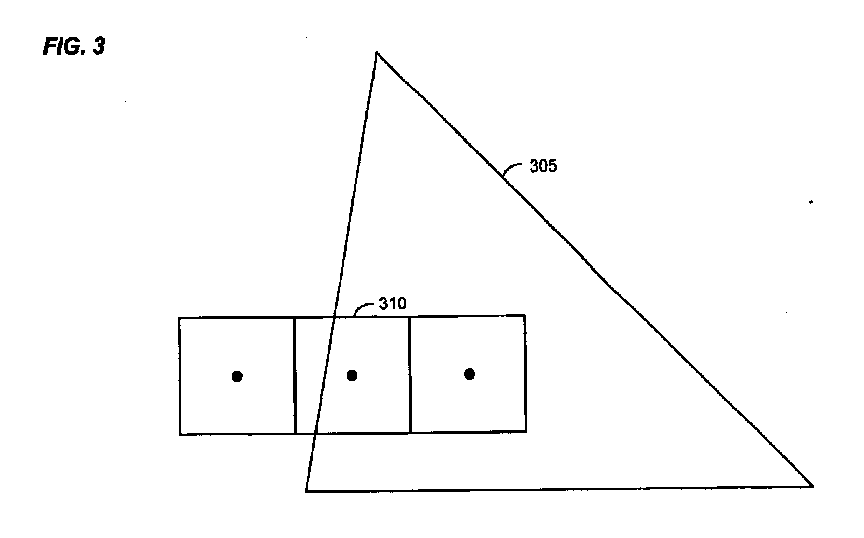

FIG. 3 is a block diagram that shows a triangle and pixels in accordance with various aspects of the invention A pixel 310 lies on the edge of the triangle 205 and on a silhouette of an image (not shown) In operation without anti-aliasing, the pixel 310 may be colored with a color of the triangle 305 because the center of the pixel 310 lies within the triangle To avoid or reduce aliasing, however, each pixel that lies on the edge of the triangle 305 (and silhouette of the image) may be caused to display a color that is a mixture of the color of a background pixel (or a color of a pixel of an object behind the triangle) and a color of the triangle 305 For example, if the pixel 310 is 90 percent within the triangle 305 and 10 percent outside of the triangle 305, the color of pixel 310 may be a blend that is 90 percent weighted to a color of the triangle and 10 percent weighted to the background color The percent of a pixel that is partially within a triangle may be calculated as proportional to the distance from the pixel's center to the edge of the triangle

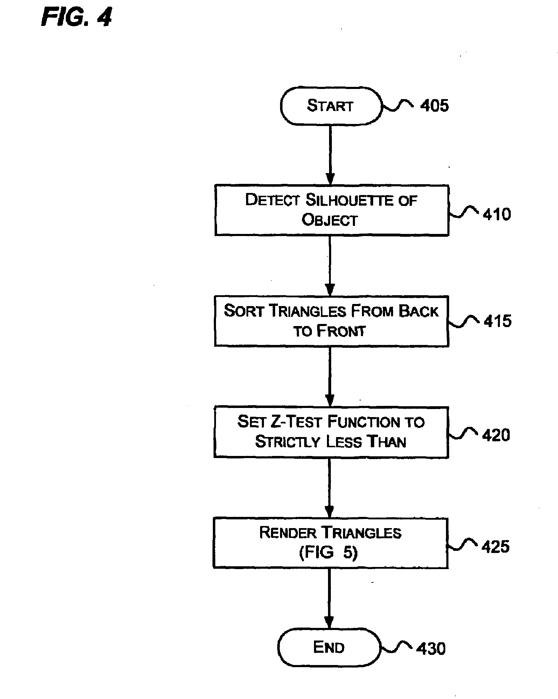

FIG 4 is a flow diagram that represents actions that may be performed in anti-aliasing in accordance with various aspects of the invention At block 405, the process begins At block 410, the silhouette of the object (from a viewpoint) to be anti-aliased is detected This may be done by using adjacency information for each triangle face to find the edge which touches both a triangle facing a viewpoint as well as one which faces away from the viewpoint Other methods of silhouette detection may be used without departing from the spirit or scope of the invention An exemplary silhouette detection algorithm is described in Sander, P V , Gortler, S J , Hoppe, H , and Snyder, J , 2001, Discontinuity edge overdraw, In *Symposium on Interactive* 3D *Graphics,* 167-174, which is hereby incorporated by reference

In one embodiment of the invention, anywhere a discontinuity edge occurs is treated as being on the silhouette It will be recognized that treating such edges as being on the silhouette may allow anti-aliasirig to be performed of sharp edges that do not lie on the actual silhouette of the object

At block 415, the triangles that comprise the object are sorted from back to front with respect to the viewpoint At block 420, the Z-Test function is set to be "strictly less than" Setting the Z-Test function to be strictly less than has the effect of making sure a pixel is not drawn over an existing pixel unless the new pixel's Z value is strictly less than the existing pixel's Z value

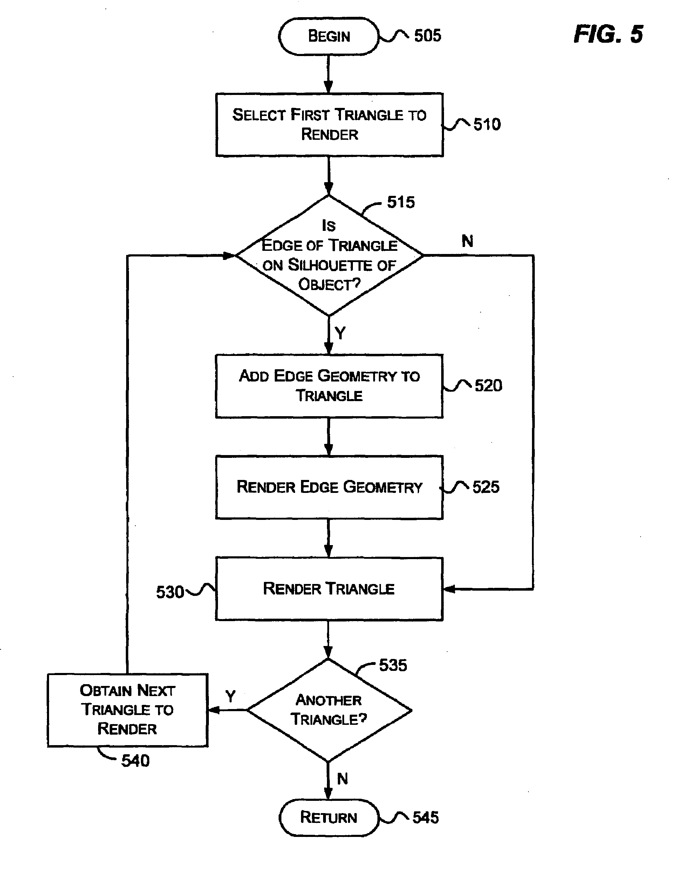

At block 425, the triangles are rendered as described in more detail in conjunction with FIG 5 At block 430, the process ends

FIG 5 is a flow diagram corresponding to the block 425 of FIG 4 in accordance with various aspects of the invention At block 505, the process is entered At block 510, the first triangle to render is selected This is the triangle that is furthest away from the viewpoint from which the object is viewed At block 515, a determination is made as to whether the edge of the triangle is on a silhouette of the object If so, processing branches to block 520, otherwise processing branches to block 530

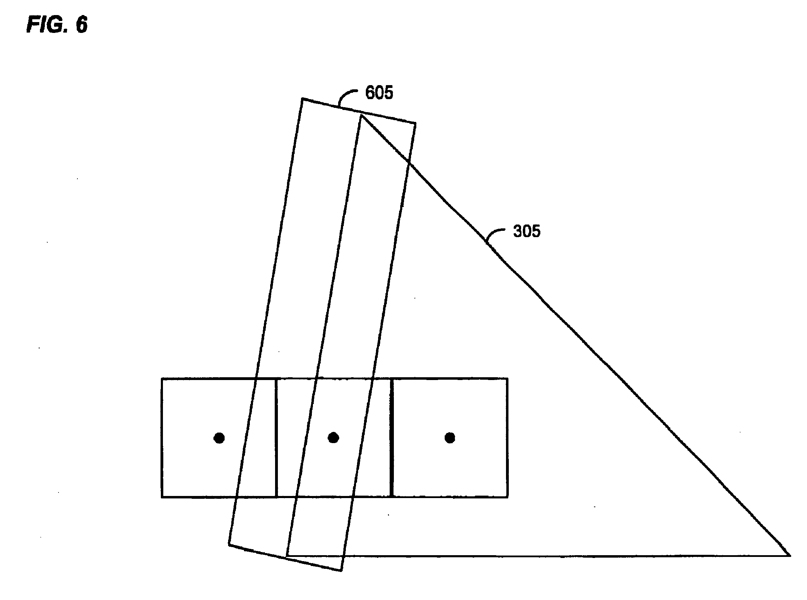

At block 520, new edge geometry is created for the edge of the triangle that lies on the silhouette of the object FIG 6 is a block diagram that shows the triangle of FIG 3 together with an example of new edge geometry in accordance with various aspects of the invention The new edge geometry 605 may be one pixel wide and be positioned such that the middle of the new edge geometry lies on the silhouette edge of the triangle 305 This causes the new edge geometry 605 to extend half a pixel into the triangle 305 and half a pixel outside the triangle 305 on the silhouette edge In other embodiments of the invention, the edge geometry may be more or less than one pixel wide

The edge geometry 605 may be created in the same plane as the plane that includes the triangle 305 This guarantees that it will have the same Z values as the pixels of the triangle that it overlaps Furthermore, because the edge geometry 605 is drawn before the triangle 305, when the triangle 305 is drawn, it will not overdraw any pixels in the edge geometry 605 because of the "strictly less than" setting of the Z test Alternatively to setting the Z-Test function to be "strictly less than," the edge geometry 605 may be biased such that its Z values indicate that the edge geometry 605 is slightly in front of the triangle pixels that the edge geometry 605 overlaps In addition, the Z-Test function may be set to not overdraw a pixel with another pixel if the other pixel has a Z buffer value that is less than or equal to the pixel This may be done to ensure that when rendering the triangle, that the pixels of the triangle are not overdrawn over any pixels affected by the edge geometry 605

In another embodiment of the invention, instead of using the "strictly less than" setting of the Z test to prevent the rendering of the triangle 305 from overdrawing pixels of the edge geometry 605, the triangle 305 may be modified so that it no longer overlaps the edge geometry 605 In addition, the edge geometry 605 may be positioned in the plane of the viewpoint or in the plane of the triangle Positioning the edge geometry 605 in the plane of the viewpoint instead of the plane of the triangle may avoid errors that may occur if the edge geometry 605 extends in front of the near clipping plane To avoid visual discontinuities between the texturing of the triangle and the texturing of the edge geometry when modifying the triangle 305 in this manner, the texture coordinates of the triangle may also need to be modified The edge geometry 605 may be textured with two textures that are modulated together The two textures may be modulated together by providing a renderer with the two textures and indicating that each texture should be applied to the edge geometry 605 One of the textures may be the same texture as the triangle, so that colors along the edge geometry 605 match the colors of the triangle 305 The other texture of the edge geometry may be an alpha gradient that ranges continuously from opaque (i e , not transparent at all) on the side of the edge geometry 605 that is inside of the triangle to transparent on the side of the edge geometry 605 that is outside the triangle 305

Placing the alpha gradient on the edge geometry 605 causes a pixel that has a center on the inside edge of the edge geometry 605 to be opaque, a pixel that has a center on the edge of the triangle 305 within the edge geometry 605 to be half transparent, and a pixel that has a center on the outside edge of the edge geometry 605 to be completely transparent

In another embodiment of the invention, the edge geometry 605 may be more than one pixel in width Furthermore, instead of a ramp between transparent and opaque, the transparency of each part of the edge geometry 605 may be determined by a function (e g , sin(x)/x) In such cases such a function combined with a wider edge geometry may reconstruct the silhouette of an object more correctly than a linear transparency in combination with a pixel-width edge geometry

Texture is one form of interpolation mechanism that may be used to determine the colors of pixels associated with an edge geometry In other embodiments of the invention, other interpolation mechanisms may be used to determine the colors of pixels associated with an edge geometry Some exemplary interpolation mechanisms include Gouraud shading, texture, pixel shaders, and the like

More than one pixel shader may be applied to pixels associated with an edge geometry This may be done by applying one pixel shader to the pixels and then afterwards applying another pixel shader to the pixels and so on A pixel shader may comprise a component or process that calculates colors for each pixel associated with a geometry

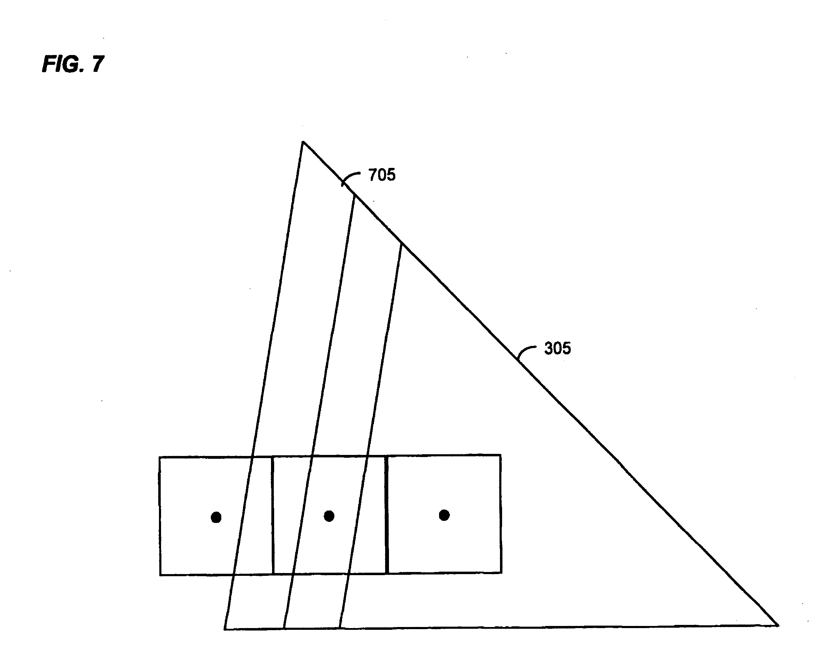

Although shown as a rectangle, the edge geometry 605 may be another geometry or size without departing from the spirit or scope of the invention For example, an edge geometry may be fashioned as shown by the edge geometry 705 of FIG 7, which is a diagram that shows the triangle of FIG 3 together with another exemplary edge geometry in accordance with various aspects of the invention Other geometries may also be used based on the object being displayed

Furthermore, for triangles close to one pixel in size or smaller, an edge geometry may not be created

Referring to FIG 5 again, after the edge geometry is created at block 520, it may have its Z buffer value slightly biased so that the renderer will not draw any pixels from the triangle within the edge geometry as described earlier Thereafter, the edge geometry is rendered at block 525 At block 530, the triangle is rendered At block 535, a determination is made as to whether another triangle exists to render If so, processing branches to block 540, otherwise, processing branches to block 545

At block 540, the next triangle to render is obtained The selection of triangles goes from those furthest from a viewpoint to those closest to the viewpoint This may be done at least in part so that colors from pixels of triangles further away are blended with colors from overlapping partially transparent pixels of triangles that are closer

At block 545, the process returns

Referring again to FIG 1, the various actions described above may be carried out by a processor on the video interface 190 alone or in combination with the processing unit 120 of the computer 110 In some embodiments, many or all of the actions described above may be performed by the video interface 190 while in other embodiments, many or all of the actions described above may be performed by the processing unit 120 Other processors (not shown) that are located on the computer 110 or remotely may also be used without departing from the spirit or scope of the invention

As can be seen from the foregoing detailed description, there is provided an improved method for hardware accelerated anti-aliasing in 3D While the invention is susceptible to various modifications and alternative constructions, certain illustrated embodiments thereof are shown in the drawings and have been described above in detail It should be understood, however, that there is no intention to limit the invention to the specific forms disclosed, but on the contrary, the intention is to cover all modifications, alternative constructions, and equivalents falling within the spirit and scope of the invention

## Claims

1. A computer-readable medium having computer-executable instructions, comprising
selecting a shape having an edge on a silhouette of an object,
creating an edge geometry at the edge,
rendering the edge geometry, and
after rendering the edge geometry, rendering the shape,

2. The computer-readable medium of claim 1, wherein the shape comprises a triangle

3. The computer-readable medium of claim 1, wherein the silhouette is defined by a viewpoint from which the object is viewed

4. The computer-readable medium of claim 3, wherein the silhouette comprises an edge that touches both a shape that faces the viewpoint and a shape that faces away from the viewpoint

5. The computer-readable medium of claim 1, wherein the edge geometry comprises a shape one pixel in width

6. The computer-readable medium of claim 1, wherein the shape is positioned in a plane and wherein the edge geometry is positioned in the plane

7. The computer-readable medium of claim 1, wherein the shape is positioned in a plane and wherein the edge geometry is position in another plane

8. The computer-readable medium of claim 7, wherein the other plane comprises a plane of a viewpoint from which the object is viewed

9. The computer-readable medium of claim 1, wherein creating an edge geometry at the edge comprises applying a first pixel shader to pixels associated with the edge geometry

10. The computer-readable medium of claim 9, wherein creating an edge geometry at the edge further comprises applying a second pixel shader to pixels associated with the edge geometry

11. The computer-readable medium of claim 1, wherein creating an edge geometry at the edge comprises applying an interpolation mechanism to pixels associated with the edge geometry.

12. The computer-readable medium of claim 11, wherein the interpolation mechanism comprises a Gouraud shader

13. The computer-readable medium of claim 11, wherein the interpolation mechanism comprises a pixel shader

14. The computer-readable medium of claim 1, wherein creating an edge geometry at the edge comprises creating a texture that matches a texture of pixels at the edge

15. The computer-readable medium of claim 14, wherein creating an edge geometry at the edge further comprises creating another texture that ranges from opaque to transparent

16. The computer-readable medium of claim 15, wherein the other texture is opaque at a side of the edge geometry that is closest to the shape and transparent at a side of the edge geometry that is farthest from the shape

17. The computer-readable medium of claim 15, wherein the other texture linearly ranges from opaque to transparent

18. The computer-readable medium of claim 15, wherein the other texture ranges from opaque to transparent based on a non-linear function

19. The computer-readable medium of claim 18, wherein the non-linear function comprises a sinusoidal function

20. The computer-readable medium of claim 18, wherein the shape is more than one pixel in width

21. The method of claim 1, further comprising setting a Z-Test function to strictly less than such that a pixel associated with the object is not overdrawn over another pixel unless the pixel is closer to the viewpoint than the other pixel

22. A method for rendering an image, comprising
sorting shapes that represent an object, wherein the sorting is based on distances of the shapes from a viewpoint associated with the object,
creating an edge geometry for a shape that is on a silhouette of the object, and
modifying the shape so that it does not overlap the edge geometry

23. The method of claim 22, further comprising rendering the shapes in order from those furthest away from the viewpoint to those closest to the viewpoint

24. The method of claim 22, further comprising modifying a texture of the shape to be continuous with a texture of the edge geometry

25. The method of claim 22, wherein the shapes are polygons

26. The method of claim 25, wherein the polygons are triangles

27. The method of claim 22, wherein creating an edge geometry for a shape that is on a silhouette of the object comprises creating the edge geometry to overlap an edge of the shape

28. The method of claim 27, wherein the edge geometry comprises a polygon

29. The method of claim 28, wherein the polygon comprises a rectangle

30. The method of claim 27, wherein the shape is positioned in a plane and wherein creating the edge geometry to overlap an edge of the shape comprises creating the edge geometry in the plane and at least a portion of the edge geometry in a portion of the plane in which the shape exists

31. An apparatus for rendering an image, comprising
a set of one or more processor arranged to
detect a silhouette of an object,
create an edge geometry at an edge of a shape that
lies on the silhouette of the object,
render the edge geometry, and
modify the shape to remove any portion that overlaps the edge geometry or render the shape after the edge geometry is rendered

32. The apparatus of claim 31, further comprising a display arranged to display a representation of the object

33. The apparatus of claim 31, wherein the set of one or more processors includes a processor of a graphics card

34. The apparatus of claim 33, wherein the set of one or more processors also includes a processor of a computer in which the graphics card is placed

35. The apparatus of claim 31, wherein the set of one or more processors includes only one processor
